Europäisches Patentamt

European Patent Office

Office européen des brevets

(19)

(11) Publication number: **0 171 966**
**A1**

## (12) EUROPEAN PATENT APPLICATION

(21) Application number: **85305394.0**

(22) Date of filing: **29.07.85**

(51) Int. Cl.⁴: **F 16 D 7/00**
**F 16 D 35/00**

(30) Priority: **11.08.84 GB 8420461**

(43) Date of publication of application:
**19.02.86 Bulletin 86/8**

(84) Designated Contracting States:
**AT BE CH DE FR GB IT LI LU NL SE**

(71) Applicant: **GKN TECHNOLOGY LIMITED**
**Birmingham New Road**
**Wolverhampton WV4 6BW(GB)**

(72) Inventor: **Dale, Alan Keith**
**8 Greenfield Road**
**Bridgnorth Shropshire, WV16 4JT(GB)**

(74) Representative: **Dodd, Graham Marshall et al,**
**Guest Keen and Nettlefolds plc Group Patents and**
**Licensing Department P.O. Box 55 Ipsley House Ipsley**
**Church Lane**
**Redditch Worcestershire B98 0TL(GB)**

(54) Overload clutch.

(57) An overload clutch, e.g. for protecting a drive line between a tractor and an agricultural implement, incorporating a ratchet type overload clutch (15, 23, 24, 25, 19, 26) which ceases torque transmission on a pre-determined torque being exceeded, and a viscous shear coupling (27) which continues to transmit torque up to a limiting value when the ratchet type clutch disengages.

./...

EP 0 171 966 A1

GMD/P84.083

## OVERLOAD CLUTCH

This invention relates to an overload (torque-limiting) clutch, for protecting a drive line against excessive torque.

An overload clutch is typically employed for protection of the drive line between the power take-off shaft of a tractor and an agricultural machine or implement drawn thereby. In such agricultural application, excessive torque may arise if the machine or implement experiences a blockage. For example, a cultivator may encounter a large stone or tree root. High peak torques can also arise due to a more sustained overloading, or a temporary blockage which is then cleared. High torques can also occur at starting, if the clutch controlling the tractor power take-off shaft is suddenly engaged at high engine speed. This is particularly the case if the machine being driven is one which has a high rotary inertia, and therefore takes a substantial time to be accelerated up to its normal operating speed. This last effect is particularly a problem since modern clutches for tractor power take-off commonly are engaged by an hydraulic control arrangement, so that the tractor driver has no control over the speed of the engagement. Fitting of an overload protection device in the power take-off drive line protects from damage from these sources.

One type of overload clutch used for this purpose is of the so called ratchet type, in which torque is transmitted by way of elements associated with one member of the clutch and spring biased into recesses associated with another member of the clutch. On a predetermined torque being exceeded, the elements disengage from the recesses against their spring biasing. When the elements thus disengage, as well as the obvious cessation of drive, there is an audible indication of the state of the overload clutch. However, this type of clutch has a disadvantage in that no or substantially no torque is transmitted after disengagement. To re-engage, it is necessary to stop the tractor power take-off shaft. This is a disadvantage if overload and disengagement occurs during starting of a high inertia machine or implement, or if the machine or implement experiences a temporary blockage in service which clears itself.

Another type of overload clutch commonly utilised is of the friction type, in which torque is transmitted by way of friction elements such as plates, spring biased together so that slippage occurs at a pre-determined torque. This overcomes the above mentioned disadvantage of ratchet type clutches, but has a disadvantage in that the friction elements can become bound together during even a relatively short period of disuse, so that when next used the clutch provides no effective protection against overload, or at least the torque at which slippage occurs has altered from the desired value.

It is the object of the present invention to provide an overload clutch in which these disadvantages are overcome or reduced.

According to the invention, we provide an overload clutch comprising first and second members adapted to be connected to respective drive line parts, torque transmitting elements associated with one of said members and spring biased into recess means associated with the

3

0171966

other of said members for torque transmission therebetween, and arranged to disengage from said recesses against said spring biasing to discontinue torque transmission upon a pre-determined torque being exceeded, and a viscous shear coupling having respective parts connected to said first and second members.

A viscous shear coupling transmits torque between its parts by virtue of a suitable viscous liquid occupying the space between sets of elements of large surface area, e.g. annular plates, connected to the respective parts. The torque transmitted by a viscous shear coupling rises with the difference in rotational speed between the parts, the rate of rise of transmitted torque decreasing with increasing speed difference until a limit of transmitted torque is reached.

Therefore, the present invention combines a ratchet type of overload clutch with a viscous shear coupling. As the ratchet clutch disengages in response to an overload, the torque transmitted thereby falls to a very low value and the torque transmitted by the viscous shear coupling rises in a controlled manner to a pre-set torque. In the case of a transient overload, the torque transmitted by the viscous shear coupling will continue to drive the machine or implement at a safe torque level until the speeds of the first and second members of the overload clutch again synchronise and the ratchet clutch re-engages. It is not necessary to stop driving the tractor power take-off shaft. In the case of a permanent blockage of the machine or implement, drive line torque would remain at a safe value while the ratchet clutch continues to slip and warn the operator of the overload.

The invention thus overcomes the disadvantages above referred to in relation to ratchet type or friction type overload clutches of conventional design, while combining the advantages thereof. A further advantage is that a viscous shear coupling is essentially a closed assembly, so the clutch as a whole is not vulnerable to use or storage under unfavourable atmospheric conditions.

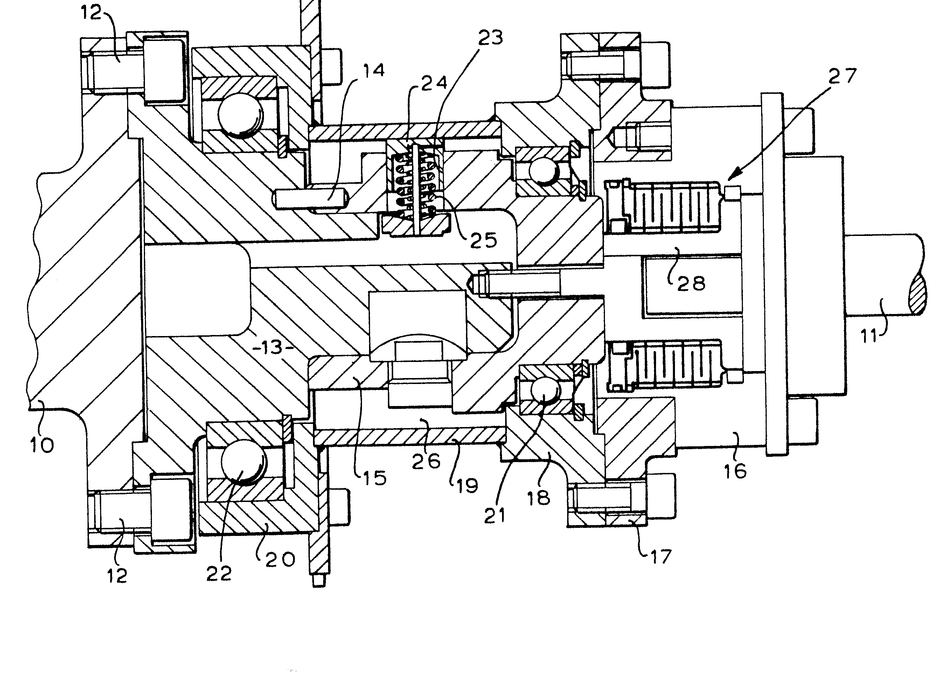

The invention will now be described by way of example with reference to the accompanying drawing, which is a view partly in section of an overload clutch according to the invention.

The drawing shows diagrammatically an overload clutch comprising a first member 10 and a second member 11, adapted to be connected to respective drive line parts. By way of example, member 10 may be provided with a hub adapted to fit on the power take-off shaft of an agricultural tractor, and member 11 adapted to be connected to a universally jointed drive shaft by which a machine or implement is driven from the tractor power take-off. Member 10 has connected to it, by bolts 12 a component 13 which in turn has driving engagement, by way of pins 14, with a component 15. The other member 11 of the clutch is connected to a succession of annular body parts 16, 17, 19, 20. Ball bearing assemblies 21, 22 are disposed between part 18 and component 15, and part 20 and component 13, respectively, so that the members 10, 11 of the overload clutch are supported in alignment, for rotation relative to one another.

Component 15 is provided with a plurality of circumferentially spaced radially extending bores as 23, receiving respective plungers 24 which are biased radially outwardly by springs 25. Part 19 has circumferentially spaced axially extending internal grooves 26, with which the heads of plungers 24 are engagable under the force of their biasing springs. The plungers thus constitute elements by which torque is transmitted between members 10, 11 of the overload clutch, up to a limiting value at which the plungers retract into their bores 23 against the action of their biasing springs, to discontinue torque transmission. The shapes of grooves 26 and the heads of the plungers 24 are such that a suitable force tending to retract the plungers is produced under torque transmission.

Thus far described, the overload clutch is a conventional overload clutch of the so-called ratchet type. According to the invention, the clutch incorporates a viscous shear coupling indicated generally at 27, shown diagrammatically rather than in detail. The coupling, which is of a generally known type, comprises two sets of intercalated annular plates, one set of which is fast with part 16 and the other set of which is fast with an internal part 28 connected to component 15. A viscous fluid, usually a silicone liquid, occupies the spaces between the plates, so as to transmit torque through the liquid in shear, up to a limiting value.

Thus, when the ratchet overload clutch section of the clutch according to the invention slips upon its torque limit being reached, the viscous shear coupling 27 will continue to transmit torque between members 10, 11, up to the limiting value of the coupling 27. The limiting torque of the viscous shear coupling is preferably selected to be slightly above the disengagement torque of the ratchet clutch elements. Such torque is, of course, selected to be such that the

6

0171966

drive line is safe.

It will be appreciated that the invention is applicable to overload clutches of different configuration from that illustrated. For example, there are ratchet type overload clutches in which torque is transmitted by balls disposed between axially opposed plates with recesses or apertures, and this construction may be utilised in an overload clutch according to the invention. Further, there are different configurations of viscous shear coupling from that illustrated, and these may be utilised.

CLAIMS

1.   An overload clutch comprising first and second members (10, 11) adapted to be connected to respective drive line parts, torque transmitting elements (24) associated with one of said members and spring (25) biased into recess means (26) associated with the other of said members for torque transmission therebetween, and arranged to disengage from said recesses against said spring biasing to discontinue torque transmission upon a pre-determined torque being exceeded, characterised by a viscous shear coupling (27) having respective parts connected to said first and second members.

2.   An overload clutch according to Claim 1 further characterised in that said viscous shear coupling (27) has a limiting torque above said pre-determined torque.

# EUROPEAN SEARCH REPORT

## DOCUMENTS CONSIDERED TO BE RELEVANT

EP 85305394.0

| Category | Citation of document with indication, where appropriate, of relevant passages | Relevant to claim | CLASSIFICATION OF THE APPLICATION (Int. Cl 4) |
|---|---|---|---|
| A | GB - A - 1 591 088 (SMITHS INDUSTRIES LTD.) <br><br> * Totality * | | F 16 D 7/00 <br> F 16 D 35/00 |
| A | DE - A1 - 3 137 772 (FICHTEL & SACHS AG) <br><br> * Totality * | | |
| A | DE - A1 - 2 414 135 (BETZING) <br><br> * Totality * | | |

**TECHNICAL FIELDS SEARCHED (Int. Cl 4)**

F 16 D 7/00
F 16 D 35/00
F 16 D 47/00

The present search report has been drawn up for all claims

| Place of search | Date of completion of the search | Examiner |
|---|---|---|
| VIENNA | 14-11-1985 | KAMMERER |

EPO Form 1503 03 82